# EUROPÄISCHE PATENTSCHRIFT

(11) **EP 3 638 852 B1**
(45) Veröffentlichungstag und Bekanntmachung des Hinweises auf die Patenterteilung: **04.08.2021**
(21) Anmeldenummer: 18731999.1
(22) Anmeldetag: 11.06.2018
(51) Int. Cl.: E02B 17/00, E02B 17/02, B63B 35/44, B63B 59/06, E04G 23/00

(54) **OFFSHORE-SUBSTATION FÜR EINE WINDENERGIEANLAGE UND VERFAHREN ZUM SPÜLEN VON ABSCHATTUNGSBEREICHEN**
OFFSHORE SUBSTATION FOR A WIND TURBINE AND METHOD FOR FLUSHING SHELTERED REGIONS
SOUS-STATION OFFSHORE POUR UNE TURBINE ÉOLIENNE ET PROCÉDÉ DE RINÇAGE DE ZONES MASQUÉES

(30) Priorität: 14.06.2017 DE 102017113189
(43) Veröffentlichungstag der Anmeldung: 22.04.2020
(73) Patentinhaber: RWE Renewables GmbH, 45145 Essen (DE)
(72) Erfinder: SCHLÜTER, Thorsten, 25355 Barmstedt (DE)
(74) Vertreter: Keenway Patentanwälte Neumann Heine Taruttis
(86) Internationale Anmeldenummer: PCT/EP2018/065278
(87) Internationale Veröffentlichungsnummer: WO 2018/228969

(56) Entgegenhaltungen:
- EP-A1- 2 351 885
- JP-A- H0 310 984

## Beschreibung

Die Erfindung betrifft eine Offshore-Substation für eine Windenergieanlage und ein Verfahren zum Spülen von Abschattungsbereichen einer Offshore-Substation für eine Windenergieanlage.

Offshore-Stationen werden häufig über mehrere Decks aus Metall gebaut. Das verwendete Metall wird üblicherweise durch Beschichtungen gegen Korrosion geschützt. Da es in der salzhaltigen Offshore-Atmosphäre zu einer erhöhten Belastung durch Chloride kommt, gibt es selbst bei starkem Korrosionsschutz nach einer gewissen Einwirkdauer der Chloride Korrosionserscheinungen an dem Metall der Offshore-Station.

Insbesondere in Spalt- oder Kantenbereichen kann es zu einer erhöhten Konzentration von Chloriden kommen, wobei sich durch die abgegebenen Metallionen Metallchloride bilden. Diese Metallchloride reagieren im nächsten Schritt mit Wasser zu Metallhydroxid und Salzsäure. Die Säure lässt den pH-Wert sinken, wodurch die Korrosionsreaktion beschleunigt wird.

Die Korrosion kann verstärkt in Bereichen der Offshore-Station voranschreiten, die nicht nur eingeschränkt natürlicher Beregnung ausgesetzt sind und demnach nicht ausreichend abgewaschen bzw. gespült werden. Aus diesem Grund werden derartige Abschattungsbereiche, in denen Korrosion verstärkt auftritt, regelmäßig durch Wartungspersonal mit Süßwasser abgewaschen bzw. gespült. Die Spülung erfolgt demnach manuell in festgelegten Intervallen, wobei Wartungspersonal die entsprechenden Bereiche mithilfe von Reinigungsgerät abspült. Die manuelle Wartung ist zeit- und kostenintensiv und kann, durch die eingeschränkte Erreichbarkeit bestimmter Bereiche, nicht in allen Abschattungsbereichen zuverlässig und in der erforderlichen Regelmäßigkeit durchgeführt werden.

Eine Korrosionsschutzvorrichtung eines Offshore-Lagerhauses ist zum Beispiel aus Dokument JP H03 10984 A bekannt.

Dokument EP 2 351 885 A1 offenbart ein Offshore-Umspannwerk.

Ausgehend von dem voranstehend beschriebenen Stand der Technik liegt der Erfindung die technische Problemstellung zugrunde, eine Offshore-Substation für eine Windenergieanlage und ein Verfahren zum Spülen von Abschattungsbereichen anzugeben, welche die voranstehend beschriebenen Nachteile nicht oder zumindest in geringerem Maße aufweisen und insbesondere eine verminderte Korrosion an Abschattungsbereichen einer Offshore-Substation für eine Windenergieanlage ermöglichen.

Die voranstehend beschriebene technische Problemstellung wird gelöst durch eine Offshore-Substation für eine Windenergieanlage nach Anspruch 1 sowie ein Verfahren nach Anspruch 9. Weitere Ausgestaltungen der Erfindung ergeben sich aus den abhängigen Ansprüchen und der nachstehenden Beschreibung.

Gemäß einem ersten Aspekt betrifft die Erfindung eine Offshore-Substation für eine Windenergieanlage, mit einer Metallstruktur, wobei die Metallstruktur Beregnungsbereiche hat, die natürlicher Beregnung ausgesetzt sind, wobei die Metallstruktur Abschattungsbereiche hat, die natürlicher Beregnung nicht oder nur begrenzt ausgesetzt sind, mit wenigstens einer Reinigungseinrichtung, wobei die Reinigungseinrichtung wenigstens eine Sammeleinrichtung, wenigstens ein Leitungssystem und Auslassöffnungen aufweist, wobei die Sammeleinrichtung zum Auffangen von Regenwasser eingerichtet ist, wobei das Leitungssystem mit der Sammeleinrichtung verbunden ist und zum Verteilen des Regenwassers eingerichtet ist und wobei die Auslassöffnungen zum Spülen der Abschattungsbereiche mit Regenwasser eingerichtet sind.

Mithilfe der Reinigungseinrichtung kann insbesondere eine automatisierte und/oder simultane und/oder autarke Spülung von Abschattungsbereichen erfolgen. So kann erreicht werden, dass alle für Korrosionserscheinungen kritischen Abschattungsbereiche regelmäßig gespült werden. Zudem können die Wartungskosten reduziert werden. Die Spülvorgange können unabhängig von der Verfügbarkeit von Wartungsteams durchgeführt werden. Die Leitungen der Reinigungseinrichtung können in Abschattungsbereiche geführt sein, die durch Wartungspersonal nicht oder nur schwer erreichbar sind.

Abschattungsbereich können insbesondere dadurch gebildet sein, dass die Offshore Station mehrere übereinanderliegende Decks hat, wobei die unteren Decks durch die darüberliegenden oberen Decks teilweile oder ganz überspannt bzw. abgeschattet sind.

Bei der Offshore-Station handelt es sich erfindungsgemäß um eine Offshore-Substation für eine Windenergieanlage. Die Offshore-Substation dient dazu, die durch eine oder mehrere Windenergieanlagen gewonnene Energie zu transformieren und zu exportieren.

Gemäß einer Ausgestaltung der Offshore-Substation für eine Windenergieanlage ist vorgesehen, dass die Reinigungseinrichtung wenigstens einen Filter und/oder wenigstens einen Öl/Wasser-Separator und/oder wenigstens eine Wasseraufbereitungseinrichtung hat, um das aufgefangene Regenwasser vor dem Spülen der Abschattungsbereiche aufzubereiten. So kann sichergestellt werden, dass kein verunreinigtes Wasser verwendet wird bzw. dass zum Spülen nur Wasser ausreichender Qualität in die Umwelt freigesetzt wird.

Die Auslassöffnungen können an Düsen gebildet sein, insbesondere an Sprinklerdüsen. Mithilfe der Düsen kann das Regenwasser großflächig verteilt und/oder zielgerichtet auf zu spülende Flächen der Abschattungsbereiche aufgebracht werden. So kann ein zuverlässiges Spülen der Abschattungsbereiche erreicht werden.

Es können eine oder mehrere Pumpen vorgesehen sein, um das Regenwasser zu den Auslassöffnungen zu fördern. Insbesondere können die Pumpen dazu eingerichtet sein, einen vorgegebenen Druck in dem Leitungssystem bereitzustellen. Beispielsweise kann ein vorgegebener Druck eingestellt werden, um das Regenwasser zuverlässig durch Düsen zu fördern, an denen die Auslassöffnungen zum Ausbringen des Regenwassers gebildet sind.

Das Leitungssystem kann Rohre und/oder Schläuche aufweisen, deren Mantelflächen Auslassöffnungen zum Ausbringen des Regenwassers aufweisen können. Alternativ oder ergänzen zu Düsen können die Auslassöffnungen demnach integraler Bestand der Rohre und/oder Schläuche des Leitungssystems sein. Damit kann in einfacher und kostengünstiger weise eine Vielzahl von Auslassöffnungen bereitgestellt werden.

Beispielsweise können Schläuche oder Rohre vorgesehen sein, die umfangsseitige Schlitze aufweisen. Eine Innendruckbeaufschlagung der inneren Mantelfläche des Schlauchs bewirkt ein reversibles Aufweiten des Schlauchs oder Rohrs im Bereich der Schlitze derart, dass das Regenwasser aus dem Schlauch oder Rohr austritt und auf angrenzende bzw. umliegende Abschattungsbereiche ausgebracht werden kann. Das Regenwasser kann beispielsweise über Pumpen mit einem vorgegebenen Druck durch den Schlauch gefördert werden, um die Schlitze des Schlauchs oder Rohrs aufzuweiten und das Regenwasser austreten zu lassen.

Nach einer weiteren Ausgestaltung der Offshore-Substation für eine Windenergieanlage kann vorgesehen sein, dass die Reinigungseinrichtung ein Steuerungssystem zum Steuern von Spülvorgängen hat, wobei das Steuerungssystem insbesondere einen Regensensor und/oder eine Zeitschaltuhr und/oder einen Füllstandsensor und/oder eine Kamera aufweist. Mithilfe des Steuerungssystems kann eine autarke Steuerung von Spülvorgängen bzw. Spülintervallen erfolgen.

Gemäß einer weiteren Ausgestaltung hat die Offshore-Substation für eine Windenergieanlage ein Helikopterdeck, wobei das Helikopterdeck eine Auffangfläche der Sammeleinrichtung zum Auffangen von Regenwasser bildet. Ein solches Helikopterdeck eignet sich aufgrund seiner exponierten Lage und großen Freifläche besonders gut als Auffangfläche, von der Regenwasser z.B. hin zu einem Vorratsvolumen geführt oder unmittelbar zu den Abschattungsbereichen geleitet und zum Spülen verwendet werden kann.

Die Sammeleinrichtung kann ein Vorratsvolumen zum Bevorraten von 2 m³ - 20 m³ Regenwasser haben. Die Größe des Vorratsvolumens kann in Abhängigkeit von der üblicherweise zu erwartenden Regenmenge und von der Größe der zu spülenden Flächen der Abschattungsbereiche ausgelegt werden. Insbesondere kann die Sammeleinrichtung ein Vorratsvolumen von 3 m³ - 10 m³ haben.

Insbesondere ist die Reinigungseinrichtung strukturell und funktional separat und unabhängig von einem gegebenenfalls an der Offshore-Substation für eine Windenergieanlage vorgesehenen Löschsystem bzw. Brandschutzsystem.

Gemäß einem zweiten Aspekt betrifft die Erfindung ein Verfahren zum Spülen von Abschattungsbereichen einer Offshore-Substation für eine Windenergieanlage, mit den Verfahrensschritten:
- Auffangen und Sammeln von Regenwasser mit einer Sammeleinrichtung zum Auffangen von Regenwasser;
- Verteilen des Regenwassers mit einem mit der Sammeleinrichtung verbundenen Leitungssystem und Zuführen des Regenwassers zu Auslassöffnungen;
- Spülen der Abschattungsbereiche mit Regenwasser über die Auslassöffnungen.

Mithilfe des Verfahrens kann insbesondere eine automatisierte und/oder simultane und/oder autarke Spülung von Abschattungsbereichen erfolgen. So kann erreicht werden, dass alle für Korrosionserscheinungen kritischen Abschattungsbereiche regelmäßig gespült werden. Zudem können die Wartungskosten reduziert werden. Die Spülvorgange können unabhängig von der Verfügbarkeit von Wartungsteams durchgeführt werden. Die Leitungen der Reinigungseinrichtung können in Abschattungsbereiche geführt sein, die durch Wartungspersonal nicht oder nur schwer erreichbar sind.

Das erfindungsgemäße Verfahren kann unter Verwendung einer voranstehend bereits beschriebenen, erfindungsgemäßen Offshore-Substation für eine Windenergieanlage durchgeführt werden. Nach einer Ausgestaltung des Verfahrens kann vorgesehen sein, dass vor dem Spülen der Abschattungsbereiche eine Aufbereitung und/oder Qualitätskontrolle und/oder Filterung des Regenwassers erfolgt. So kann sichergestellt werden, dass kein verunreinigtes Wasser verwendet wird bzw. dass zum Spülen nur Wasser ausreichender Qualität in die Umwelt freigesetzt wird.

Es kann vorgesehen sein, dass das Spülen der Abschattungsbereiche zu festgelegten Intervallen erfolgt, insbesondere vierzehntägig. So kann eine regelmäßige Reinigung bzw. Spülung der Abschattungsbereiche erreicht werden.

Alternativ oder ergänzend kann das Spülen der Abschattungsbereiche in Anhängigkeit eines Füllstands der Sammeleinrichtung erfolgen, wobei vor dem Start eines Spülvorgangs insbesondere ein Mindestfüllstand der Sammeleinrichtung vorliegt. Es kann daher vorgesehen sein, dass ein Spülvorgang nur dann erfolgt, wenn genügend Wasser zum zuverlässigen und ausreichenden Spülen aller Abschattungsbereiche vorhanden ist.

Alternativ oder ergänzend kann eine bedarfsabhängige Spülung der Abschattungsbereiche erfolgen, wobei ein Spülbedarf insbesondere durch ein die zu spülenden Abschattungsbereiche zumindest teilweise überwachendes Kamerasystem ermittelt wird.

Beispielsweise kann ein Bediener besonders korrosionsanfällige Abschattungsbereiche regelmäßig überwachen und gegebenenfalls einen Spülvorgang auslösen. Alternativ oder ergänzend kann die Auswertung der Kamerabilder softwarebasiert erfolgen, um einen Spülbedarf zu erkennen und eine Spülung auszulösen.

Alternativ oder ergänzend kann ein Spülvorgang manuell durch einen Bediener ausgelöst werden. Dies kann vor Ort auf der Offshore-Substation für eine Windenergieanlage selbst oder ferngesteuert erfolgen. Alternativ oder ergänzend kann eine kontinuierliche Spülung erfolgen. Es kann vorgesehen sein, dass Abschattungsbereiche kontinuierlich aufgefangenem Regenwasser gespült werden, um Korrosion vorzubeugen.

Nachfolgend wird die Erfindung anhand einer Ausführungsbeispiele darstellenden Zeichnung beschrieben. Es zeigen jeweils schematisch:
Fig. 1 eine Offshore-Station;
Fig. 2 eine erfindungsgemäße Offshore-Substation für eine Windenergieanlage;

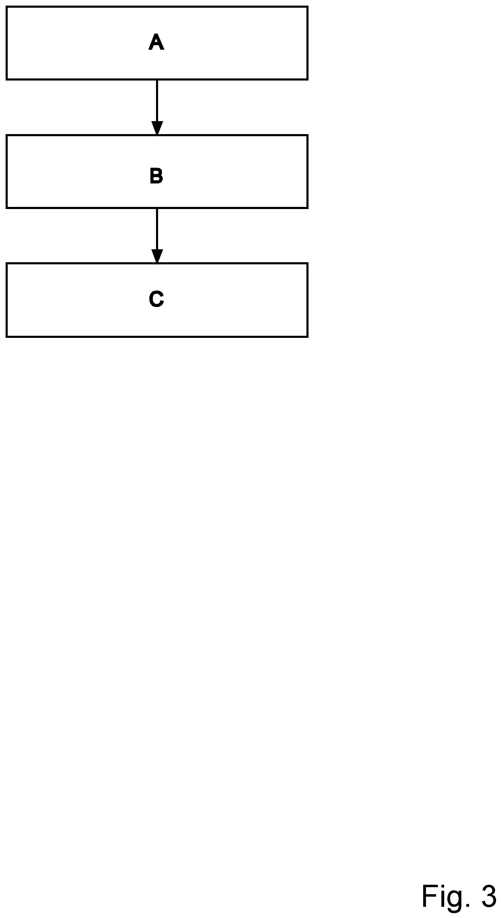

Fig. 3 ein erfindungsgemäßes Verfahren.

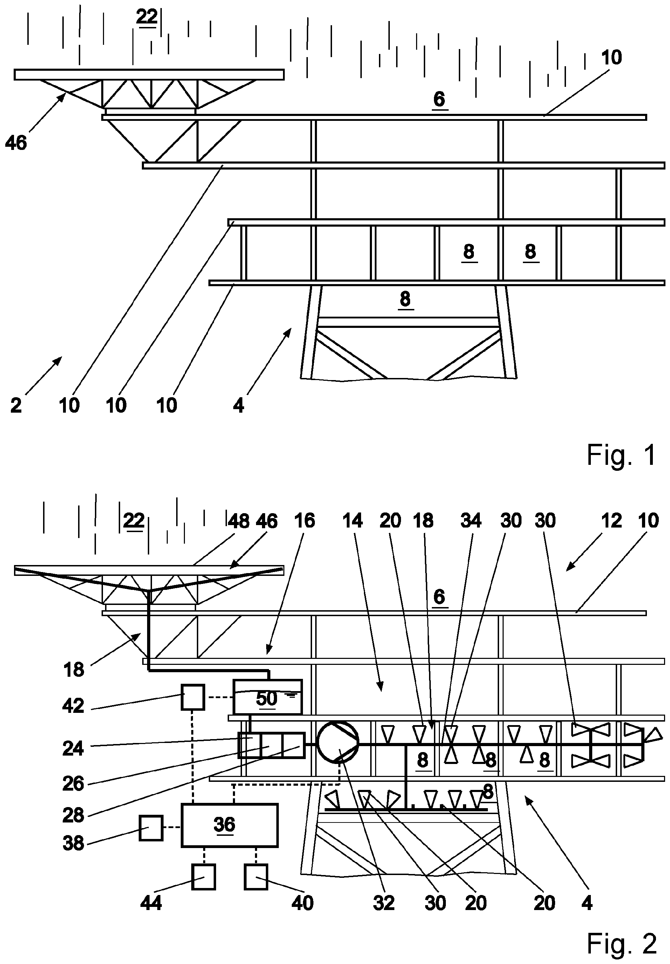

Fig. 1 zeigt eine Offshore-Station 2. Bei der Offshore-Station 2 handelt es sich eine Offshore-Substation 2 einer Windenergieanlage.

Die Offshore-Station 2 hat eine Metallstruktur 4. Die Metallstruktur 4 hat Beregnungsbereiche 6, die natürlicher Beregnung 22 ausgesetzt sind. Die Metallstruktur 4 hat Abschattungsbereiche 8, die natürlicher Beregnung 22 nicht oder nur begrenzt ausgesetzt sind. Derartige Abschattungsbereiche 8 sind insbesondere unterhalb von Decks 10 der Offshore-Station 2 gebildet. Die Offshore-Station 2 hat ein Helikopterdeck 46.

Fig. 2 zeigt eine erfindungsgemäße Offshore-Substation für eine Windenergieanlage 12 die analog zur Offshore-Station 2 eine Metallstruktur 4, Beregnungsbereiche 6, Abschattungsbereiche 8 und Decks 10 hat.

Die Offshore-Station 12 gemäß Fig. 2 hat eine Reinigungseinrichtung 14. Die Reinigungseinrichtung 14 weist eine Sammeleinrichtung 16, ein Leitungssystem 18 und Auslassöffnungen 20 auf.

Die Sammeleinrichtung 16 ist zum Auffangen von Regenwasser 22 eingerichtet. Das Leitungssystem 18 ist mit der Sammeleinrichtung 16 verbunden und zum Verteilen des Regenwassers 22 eingerichtet. Die Auslassöffnungen 20 sind zum Spülen der Abschattungsbereiche 8 mit Regenwasser 22 eingerichtet.

Die Reinigungseinrichtung 14 hat einen Filter 24, einen Öl/Wasser Separator 26 und eine Wasseraufbereitungseinrichtung 28. Diese dienen dazu, das aufgefangene Regenwasser 22 vor dem Spülen der Abschattungsbereiche 8 aufzubereiten. Die Wasseraufbereitungseinrichtung 28 kann zum zumindest teilweisen Entsalzen des Regenwassers 22 vorgesehen sein.

Die Auslassöffnungen 20 sind vorliegend an Düsen 30 gebildet. Bei den Düsen 30 handelt es sich vorliegend um Sprinklerdüsen 30.

Es ist weiter eine Pumpe 32 vorgesehen, um das Regenwasser 22 zu den Auslassöffnungen 20 zu fördern. Das Leitungssystem 18 weist Schläuche 34 und Rohre 34 auf, deren Mantelflächen ebenfalls Auslassöffnungen 20 zum Ausbringen des Regenwassers 22 aufweisen.

Die Reinigungseinrichtung 14 hat ein Steuerungssystem 36 zum Steuern von Spülvorgängen. Das Steuerungssystem 36 hat einen Regensensor 38, eine Zeitschaltuhr 40 einen Füllstandsensor 42 und eine Kamera 44.

Die Offshore-Station 12 hat ein Helikopterdeck 46. Das Helikopterdeck 46 bildet eine Auffangfläche 48 der Sammeleinrichtung 16 zum Auffangen des Regenwasser 22.

Ein Vorratsvolumen 50 der Sammeleinrichtung 16 beträgt vorliegend 15 m³.

Nachfolgend wird das erfindungsgemäße Verfahren näher beschrieben.

In einem Verfahrensschritt A wird zunächst Regenwasser 22 mit der Sammeleinrichtung 16 aufgefangen.

Das Regenwasser 22 wird im Verfahrensschritt B über das Leitungssystem 18 in das Vorratsvolumen 50 geführt. Ausgehend von dem Vorratsvolumen 50 wird das Regenwasser 22 durch den Filter 24, den Öl/Wasser Separator 26 und die Wasseraufbereitungseinrichtung 28 aufbereitet. Das Regenwasser 22 wird weiter über das Leitungssystem 16 verteilt und den Auslassöffnungen 20 zugeführt.

In einem Verfahrensschritt C werden die Abschattungsbereiche 8 über die Auslassöffnungen 20 mit Regenwasser 22 gespült.

Ein Spülvorgang wird vorliegend vierzehntägig ausgeführt.

### Bezugszeichen

- 2: Offshore-Station
- 4: Metallstruktur
- 6: Beregnungsbereich
- 8: Abschattungsbereich
- 10: Deck
- 12: Offshore-Station
- 14: Reinigungseinrichtung
- 16: Sammeleinrichtung
- 18: Leitungssystem
- 20: Auslassöffnung
- 22: Regenwasser
- 24: Filter
- 26: Öl/Wasser-Separator
- 28: Wasseraufbereitungseinrichtung
- 30: Düse/Sprinklerdüse
- 32: Pumpe
- 34: Schläuche/Rohre
- 36: Steuerungssystem
- 38: Regensensor
- 40: Zeitschaltuhr
- 42: Füllstandsensor
- 44: Kamera
- 46: Helikopterdeck
- 48: Auffangfläche
- 50: Vorratsvolumen

## Patentansprüche

1. Offshore-Substation einer Windenergieanlage,
- mit einer Metallstruktur (4),
- wobei die Metallstruktur (4) Beregnungsbereiche (6) hat, die natürlicher Beregnung (22) ausgesetzt sind,
- wobei die Metallstruktur (4) Abschattungsbereiche (8) hat, die natürlicher Beregnung (22) nicht oder nur begrenzt ausgesetzt sind,
- mit wenigstens einer Reinigungseinrichtung (14),
- wobei die Reinigungseinrichtung (14) wenigstens eine Sammeleinrichtung (16), wenigstens ein Leitungssystem (18) und Auslassöffnungen (20) aufweist,
- wobei die Sammeleinrichtung (16) zum Auffangen von Regenwasser (22) eingerichtet ist,
- wobei das Leitungssystem (18) mit der Sammeleinrichtung (16) verbunden ist und zum Verteilen des Regenwassers (22) eingerichtet ist und
- wobei die Auslassöffnungen (20) zum Spülen der Abschattungsbereiche (8) mit Regenwasser (22) eingerichtet sind.

2. Offshore-Substation nach Anspruch 1,
**dadurch gekennzeichnet, dass**
- die Reinigungseinrichtung (14) wenigstens einen Filter (24) und/oder wenigstens einen Öl/Wasser-Separator (26) und/oder wenigstens eine Wasseraufbereitungseinrichtung (28) hat, um das aufgefangene Regenwasser (22) vor dem Spülen der Abschattungsbereiche (8) aufzubereiten.

3. Offshore-Substation nach einem der voranstehenden Ansprüche,
**dadurch gekennzeichnet, dass**
- die Auslassöffnungen (20) an Düsen (30) gebildet sind, insbesondere an Sprinklerdüsen (30).

4. Offshore-Substation nach einem der voranstehenden Ansprüche,
**dadurch gekennzeichnet, dass**
- eine oder mehrere Pumpen (32) vorgesehen sind, um das Regenwasser (22) zu den Auslassöffnungen (20) zu fördern.

5. Offshore-Substation nach einem der voranstehenden Ansprüche,
**dadurch gekennzeichnet, dass**
- das Leitungssystem (18) Rohre (34) und/oder Schläuche (34) aufweist, deren Mantelflächen Auslassöffnungen (20) zum Ausbringen des Regenwassers (22) aufweisen.

6. Offshore-Substation nach einem der voranstehenden Ansprüche,
**dadurch gekennzeichnet, dass**
- die Reinigungseinrichtung (14) ein Steuerungssystem (36) zum Steuern von Spülvorgängen hat,
- wobei das Steuerungssystem (36) insbesondere einen Regensensor (38) und/oder eine Zeitschaltuhr (40) und/oder einen Füllstandsensor (42) und/oder eine Kamera (44) aufweist.

7. Offshore-Substation nach einem der voranstehenden Ansprüche,
**gekennzeichnet durch**
- ein Helikopterdeck (46),
- wobei das Helikopterdeck (46) eine Auffangfläche (48) der Sammeleinrichtung (16) zum Auffangen von Regenwasser (22) bildet.

8. Offshore-Substation nach einem der voranstehenden Ansprüche,
**dadurch gekennzeichnet, dass**
- die Sammeleinrichtung (16) ein Vorratsvolumen (50) zum Bevorraten von 2 m³ - 20 m³ Regenwasser (22) hat.

9. Verfahren zum Spülen von Abschattungsbereichen einer Offshore-Substation einer Windenergieanlage, mit den Verfahrensschritten:
- Auffangen und Sammeln von Regenwasser (22) mit einer Sammeleinrichtung (16) zum Auffangen von Regenwasser (22);
- Verteilen des Regenwassers (22) mit einem mit der Sammeleinrichtung (16) verbundenen Leitungssystem (18) und Zuführen des Regenwassers (22) zu Auslassöffnungen (20);
- Spülen der Abschattungsbereiche (8) der Offshore-Substation der Windenergieanlage mit Regenwasser (22) über die Auslassöffnungen (20).

10. Verfahren nach Anspruch 9,
**dadurch gekennzeichnet, dass**
- vor dem Spülen der Abschattungsbereiche (8) eine Aufbereitung und/oder Qualitätskontrolle und/oder Filterung des Regenwassers (22) erfolgt.

11. Verfahren nach Anspruch 9 oder 10,
**dadurch gekennzeichnet, dass**
- das Spülen der Abschattungsbereiche (8) zu festgelegten Intervallen erfolgt, insbesondere vierzehntägig,
und/oder
- das Spülen der Abschattungsbereiche (8) in Anhängigkeit eines Füllstands der Sammeleinrichtung (16) erfolgt, wobei vor dem Start eines Spülvorgangs insbesondere ein Mindestfüllstand der Sammeleinrichtung (16) vorliegt
und/oder
- eine bedarfsabhängige Spülung der Abschattungsbereiche (8) erfolgt, wobei ein Spülbedarf insbesondere durch ein die zu spülenden Abschattungsbereiche (8) zumindest teilweise überwachendes Kamerasystem (44) ermittelt wird und/oder
- ein Spülvorgang manuell durch einen Bediener ausgelöst wird
und/oder
- eine kontinuierliche Spülung erfolgt.

## Claims

1. Offshore substation of a wind turbine,
- comprising a metal structure (4),
- wherein the metal structure (4) has rained-on regions (6) that are exposed to natural rainfall (22),
- wherein the metal structure (4) has sheltered regions (8) that are not exposed to natural rainfall (22), or only to a limited extent,
- comprising at least one cleaning device (14),
- wherein the cleaning device (14) has at least one accumulation device (16), at least one line system (18) and outlet openings (20),
- wherein the accumulation device (16) is designed to collect rainwater (22),
- wherein the line system (18) is connected to the accumulation device (16) and is designed to distribute the rainwater (22), and
- wherein the outlet openings (20) are designed to flush the sheltered regions (8) with rainwater (22).

2. Offshore substation according to claim 1, **characterized in that**
- the cleaning device (14) has at least one filter (24) and/or at least one oil/water separator (26) and/or at least one water treatment device (28) in order to treat the collected rainwater (22) before the sheltered regions (8) are flushed.

3. Offshore substation according to either of the preceding claims, **characterized in that**
- the outlet openings (20) are formed on nozzles (30), in particular on sprinkler nozzles (30).

4. Offshore substation according to any of the preceding claims, **characterized in that**
- one or more pumps (32) are provided to convey the rainwater (22) to the outlet openings (20).

5. Offshore substation according to any of the preceding claims, **characterized in that**
- the line system (18) has pipes (34) and/or hoses (34), the lateral surfaces of which have outlet openings (20) for discharging the rainwater (22).

6. Offshore substation according to any of the preceding claims, **characterized in that**
- the cleaning device (14) has a control system (36) for controlling flushing processes,
- the control system (36) in particular having a rain sensor (38) and/or a timer (40) and/or a fill level sensor (42) and/or a camera (44).

7. Offshore substation according to any of the preceding claims, **characterized by**
- a helipad (46),
- the helipad (46) forming a collecting surface (48) of the accumulation device (16) for collecting rainwater (22).

8. Offshore substation according to any of the preceding claims, **characterized in that**
- the accumulation device (16) has a storage volume (50) for storing 2 m³ to 20 m³ of rainwater (22).

9. Method for flushing sheltered regions of an offshore substation of a wind turbine, comprising the method steps of:
- collecting and accumulating rainwater (22) using an accumulation device (16) for collecting rainwater (22);
- distributing the rainwater (22) using a line system (18) connected to the accumulation device (16), and supplying the rainwater (22) to outlet openings (20);
- flushing the sheltered regions (8) of the offshore substation of the wind turbine with rainwater (22) via the outlet openings (20).

10. Method according to claim 9, **characterized in that**
- the rainwater (22) is treated and/or quality-controlled and/or filtered before the sheltered regions (8) are flushed.

11. Method according to either claim 9 or claim 10, **characterized in that**
- the sheltered regions (8) are flushed at fixed intervals, in particular every two weeks, and/or
- sheltered regions (8) are flushed depending on a fill level of the accumulation device (16), a minimum fill level of the accumulation device (16) in particular being present before the start of a flushing process and/or
- the sheltered regions (8) being flushed as required, a flushing requirement in particular being determined by a camera system (44) which at least partially monitors the sheltered regions (8) to be flushed and/or
- a flushing process being triggered manually by an operator and/or
- continuous flushing taking place.

## Revendications

1. Sous-station en mer d'une éolienne,
- comportant une structure métallique (4),
- la structure métallique (4) présentant des zones d'aspersion (6) qui sont exposées à l'aspersion naturelle (22),
- la structure métallique (4) présentant des zones d'ombrage (8) qui ne sont pas exposées à l'aspersion naturelle (22) ou seulement de façon limitée,
- comportant au moins un dispositif de nettoyage (14),
- le dispositif de nettoyage (14) présentant au moins un dispositif de collecte (16), au moins un système de canalisation (18) et des orifices de sortie (20),
- le dispositif de collecte (16) étant conçu pour récupérer de l'eau de pluie (22),
- le système de canalisation (18) étant relié au dispositif de collecte (16) et étant conçu pour distribuer l'eau de pluie (22) et
- les orifices de sortie (20) étant prévus pour rincer les zones d'ombrage (8) avec de l'eau de pluie (22).

2. Sous-station en mer selon la revendication 1,
**caractérisée en ce que**
- le dispositif de nettoyage (14) présente au moins un filtre (24) et/ou au moins un séparateur huile/eau (26) et/ou au moins un dispositif de traitement d'eau (28) pour traiter l'eau de pluie (22) collectée avant de rincer les zones d'ombrage (8).

3. Sous-station en mer selon l'une des revendications précédentes,
**caractérisée en ce que**
- les orifices de sortie (20) sont formés sur des buses (30), en particulier sur des buses d'arrosage (30).

4. Sous-station en mer selon l'une des revendications précédentes,
**caractérisée en ce que**
- une ou plusieurs pompes (32) sont prévues pour acheminer l'eau de pluie (22) vers les orifices de sortie (20).

5. Sous-station en mer selon l'une des revendications précédentes,
**caractérisée en ce que**
- le système de canalisation (18) présente des tubes (34) et/ou des tuyaux (34) dont les surfaces extérieures présentent des orifices de sortie (20) permettant d'évacuer l'eau de pluie (22).

6. Sous-station en mer selon l'une des revendications précédentes,
**caractérisée en ce que**
- le dispositif de nettoyage (14) présente un système de commande (36) permettant de commander les processus de rinçage,
- le système de commande (36) présentant en particulier un capteur de pluie (38) et/ou une minuterie (40) et/ou un capteur de niveau de remplissage (42) et/ou une caméra (44).

7. Sous-station en mer selon l'une des revendications précédentes,
**caractérisée par**
- un pont d'hélicoptère (46),
- le pont d'hélicoptère (46) formant une surface de récupération (48) du dispositif de collecte (16) permettant de récupérer de l'eau de pluie (22).

8. Sous-station en mer selon l'une des revendications précédentes,
**caractérisée en ce que**
- le dispositif de collecte (16) présente un volume de stockage (50) permettant de stocker 2 m³ à 20 m³ d'eau de pluie (22).

9. Procédé de rinçage des zones d'ombrage d'une sous-station en mer d'une éolienne, comportant les étapes de procédé :
- de récupération et de collecte d'eau de pluie (22) au moyen d'un dispositif de collecte (16) afin de récupérer de l'eau de pluie (22) ;
- de distribution de l'eau de pluie (22) au moyen d'un système de canalisation (18) relié au dispositif de collecte (16) et d'acheminement de l'eau de pluie (22) vers les orifices de sortie (20) ;
- de rinçage des zones d'ombrage (8) de la sous-station en mer de l'éolienne avec de l'eau de pluie (22) par l'intermédiaire des orifices de sortie (20).

10. Procédé selon la revendication 9,
**caractérisé en ce que**
- avant le rinçage des zones d'ombrage (8), l'eau de pluie (22) est traitée et/ou contrôlée en qualité et/ou filtrée.

11. Procédé selon la revendication 9 ou 10,
**caractérisé en ce que**
- le rinçage des zones d'ombrage (8) s'effectue à intervalles fixes, en particulier toutes les deux semaines,
et/ou
- le rinçage des zones d'ombrage (8) s'effectue en fonction d'un niveau de remplissage du dispositif de collecte (16), un niveau de remplissage minimal du dispositif de collecte (16) étant en particulier présent avant le début d'un processus de rinçage
et/ou
- les zones d'ombrage (8) sont rincées selon les besoins, le besoin de rinçage étant déterminé en particulier par un système de caméra (44) surveillant au moins partiellement les zones d'ombrage (8) à rincer
et/ou
- un processus de rinçage est déclenché manuellement par un opérateur
et/ou
- un rinçage continu est effectué.
